# EUROPEAN PATENT SPECIFICATION

(11) **EP 0 606 154 B1**
(45) Date of publication and mention of the grant of the patent: **24.02.1999**
(21) Application number: 94300040.6
(22) Date of filing: 05.01.1994
(51) Int. Cl.: B01D 29/39, B01D 29/66, B01D 29/82

(54) **Sludge filtering and thickening installation and method**
Anlage und Verfahren zum Filtern und Eindicken von Schlämmen
Procédé et installation de filtration et d'épraississement de boues

(30) Priority: 07.01.1993 JP 867/93
(43) Date of publication of application: 13.07.1994
(60) Divisional application: 96113134.9
(73) Proprietor: FUJI ELECTRIC CO. LTD., Kawasaki 210 (JP)
(72) Inventor: Yamaguchi, Mikimasa, Yokosuka City, Kanagawa 240-01 (JP); Fukuzawa, Hiroshi, Yokohama City, Kanagawa 222 (JP); Arai, Toshitaka, Kamagaya City, Chiba 273-01 (JP)
(74) Representative: Bridge-Butler, Alan James

(56) References cited:
- WO-A-91/04778
- FR-A- 2 095 091
- FR-A- 2 325 607
- GB-A- 242 383
- US-A- 5 035 799

## Description

The present invention relates to a sludge filtering and thickening installation used in water purification plants and sewage treatment plants, and a method for the filtration and thickening of sludge

US Patent 5,035,799 discloses a closed, cross-flow fluid filter assembly having a pressurized input line for polluted fluids entering into a closed header box. The closed header box fits within a filter tank and is provided with apertures and spacer assemblies on the bottom wall thereof communicating with the filter tank, the apertures providing the pressurized fluid thereto. Filter leaf assemblies are arranged in parallel within the filter tank and are maintained at their top edges in spaced relation by the spacer assemblies. The filter leaf assemblies are composed of abutting offset grids, contained within a fluid tight frame which is covered on each side by a filter media. The filter leafs are drained of filtrate through a medial tube connected to a central manifold which is connected to a vacuum source. Flow-through backwash stop-grids are arranged in the filter tank to prevent excessive bulging of the filter membranes during backwash for cleaning of the filter media. The filter media are also cleansed by the shearing effect of the pressurized input fluid flowing over filter media faces. Unfiltered fluid passes out of the filter tank at the bottom thereof. The filter assembly is designed in modular fashion with quickly releasable parts for ease of maintenance and flexibility.

Sludge filtering and thickening equipment is disclosed in Japanese Patent Publications 60-59002 and 61-57043.

The filtering and thickening equipment has plate-like filter elements arranged in a sludge tank, one end of a filtrate discharge pipe connected to the plate-like filter element, and the other end drawn out of the sludge tank. When the sludge tank is filled with sludge, sludge particles accumulate on the plate-like filter element because the sludge on the surface of the plate-like filter element is pressurized by gravity or by negative pressure acting on the inside of the filtrate discharge pipe, and water contained in the sludge penetrates into the plate-like filter element, being discharged from the sludge tank through the filtrate discharge pipe.

To explain in detail, Patent Publication 60-59002 discloses a filtering and thickening equipment, in which hollow plate-like filter elements made of water-absorbing materials with both faces affixed with filter cloths are immersed in a tank containing a liquid including substances to be filtered and thickened, and a filtrate discharging means is provided on said plate-like filter elements. This equipment can form uniformly thick cakes.

In addition, Patent Publication 61-57043 discloses a filtering and thickening installation, in which water absorbing filter plates are disposed in a filtering and thickening tank, one end of a filtrate discharge pipe is connected to the filter plate, while the other end of the filtrate discharge pipe is connected to a siphon tube disposed externally to the filtering and thickening installation. This filtering and thickening installation is constructed so that filtrate is discharged from top of the filter plate and flows down by itself because of a siphon effect. Thus, this installation uses head pressure and the siphon effect in the filtering and thickening installation, and can efficiently form uniformly thick cakes on the filter plate.

As described above, in these types of equipment, semi-solid thickened sludge accumulates on the filter plate, while sludge that has not been thickened remains in the sludge tank. After the unthickened sludge is discharged outside of the tank, the thickened sludge is separated from the filter plate by blowing compressed air into the filter plate through, for example, the filtrate discharge pipe. The separated thickened sludge falls to bottom of the sludge tank, and this sludge is then removed from the tank.

When such filtering and thickening equipment is used, the objective of thickening sludge to a high concentration is achieved to some extent by increasing the duration of pressure and filtering. In this case, it is necessary to increase the negative pressure by employing a method to increase the force of gravity by increasing the height of the sludge tank, and a method to extend the length of the filtrate discharge pipe downward outside of the sludge tank.

For example, making the length of the filtrate discharge pipe outside the sludge tank 2.7 m will ensure a negative pressure of 200 mmHg, while making it 9.5 m will ensure a negative pressure of 700 mmHg. Filtering purified water sludge with a solids concentration of 4% for 40 minutes with a negative pressure set to 200 mmHg results in a thickened sludge with a solids concentration of 10%. Filtering purified water sludge with a solids concentration of 4% for 40 minutes with a negative pressure set to 700 mmHg results in a thickened sludge with a solids concentration of 13.6%. Next, if the filtering time is extended to 100 minutes, a thickened sludge with a solids concentration of 11.2% can be obtained when the negative pressure is set to 200 mmHg, while a thickened sludge with a solids concentration of 14.5% can be obtained when the negative pressure is set to 700 mmHg.

As described, the concentration of thickened sludge can be increased to some extent by increasing the negative pressure. However, if the negative pressure is kept constant while the filtration time is prolonged, the thickened sludge concentration under a negative pressure of 700 mmHg as in the above case will increase only slightly from a solids concentration of 13.6% to a solids concentration of 14.5%.

The inventors of the present invention have investigated the causes thereof, and have discovered the following facts. When filtration is carried out continuously, sludge particles deposit on the filter cloths of the filter plate, forming deposition layers which increase the thickness and become compacted because the sludge particles are pressed tight by the filtration pressure, resulting in an increase of filtration resistance and a delay in the filtrate discharge. Water flow continues even during this process through portions where no deposition layers have been formed, making effective reduction of the water content in the deposition layers impossible. The thickness of the deposition layers continues to increase gradually under these conditions. Therefore, prolonging the filtration time or raising the negative pressure will not raise the concentration of thickened sludge in the form of deposition layers as high as had been expected.

The present invention has been made in the light of the above problems, and is intended to solve the problems found in conventional systems that require the pressure to be raised and the filtration time to be prolonged, and provide a sludge filtering and thickening installation and a method for the filtration and thickening of sludge that can produce a high-concentration sludge by preventing the water content of the unthickened sludge from passing into thickened sludge, present in the form of deposition layers formed on the filter plate, without increasing the gravity of the sludge by increasing the height of the sludge tank and increasing the negative pressure by extending the filtrate discharge pipe downwardly beneath the sludge tank.

In order to solve the above problems, a filtering and thickening installation according to the present invention comprises filter plates located in a sludge tank, an extraction device for removing unthickened sludge from the tank and a filtrate discharge pipe leading out of the tank and one end of which is connected to the upper side of the filter plates said filtrate discharge pipe being provided with a filtrate discharge pump and water supply means comprising a filtrate tank and a suction pipe to supply filtrate pumped from the filtrate tank into the filtrate discharge pipe upstream of the filtrate discharge pump and means for releasing air from the filtrate discharge pipe between the filter plates and the discharge pump.

The sludge filtering and thickening installation of the present invention operates in the following manner, corresponding with the constructional arrangements explained above.

Firstly, because the filtrate discharge pipe is provided with a water supply means and a filtrate discharge pump, water can be supplied into the filtrate discharge pipe on the suction side of the filtrate discharge pump by using the water supply means. The filtrate discharge pump can continue to operate even when the pump chamber is filled with water. If the pump continues to operate when the pump chamber is filled with water, the pump generates negative pressure against the atmospheric pressure on the suction side. As a result, air in the filtrate discharge pipe on the suction side of the filtrate discharge pump and in the filter plate connected to the filtrate discharge pipe is drawn into the pump and is discharged together with water from the piping on the pipe delivery side.

If this operation continues, the air in the filtrate discharge pipe and the filter plate continues to be discharged outside the system, gradually increasing the negative pressure. Under this condition, since the water content of sludge on the surface of the filter plate is absorbed into the filter plate as filtrate, the inside of the filter plate and the filtrate discharge pipe fills up with this filtrate.

If the water supply to the filtrate discharge pipe stops at this stage, the filtrate discharge pump sucks only filtrate that has been absorbed into the filter plate through the filtrate discharge pipe. Therefore, the high negative pressure generated on the suction side of the filtrate discharge pump can be used in the filtrate discharge pipe to perform filtration.

Secondly, with the operations as described, the sludge can be filtered by the high negative pressure that is applied to the filtrate discharge pipe. Continuing the filtration, sludge particles deposit and accumulate on the filter cloth which is on the filter plate, forming thickened sludge. While this thickened sludge, which is formed from sludge particles that are compacted tightly, has no fluidity, the surrounding unthickened sludge remains fluid. If the unthickened sludge extracting device is operated at this stage, fluid unthickened sludge is extracted from the sludge tank, thereby bringing the thickened sludge on the filter plate in the sludge tank into contact with the atmosphere. Therefore, thickened sludge deposited on the filter plate no longer contacts unthickened sludge, while the filtering of only thickened sludge that has already been formed can continue, and high-concentration thickened sludge can be obtained.

Embodiments of the invention will now be described in detail with reference to the accompanying drawings, in which:
Figure 1 is a schematic view showing the construction of the filtering and thickening installation according to the present invention, including its water supply means and filtrate discharge pump.
Figure 2 is a drawing showing one example of the water supply means of the installation of Figure 1.
Figure 3 is a schematic drawing showing a second example of the water supply means in Fig. 1.
Figure 4 is a schematic drawing showing a third example of the water supply means of the installation of Figure 1.
Figure 5 is a schematic view showing the construction of the filtering and thickening installation according to the present invention, including its discharge valve for unthickened sludge.
Figure 6 is a schematic drawing showing the construction and operation of a filtering and thickening installation shown in Figure 5, including its water supply means.
Figure 7 shows a condition in which only thickened sludge has deposited on a filter plate, based on the operation illustrated in Figure 6.

Explanations of the embodiments of the filtering and thickening installation according to the present invention are provided hereunder with reference to the appended drawings.

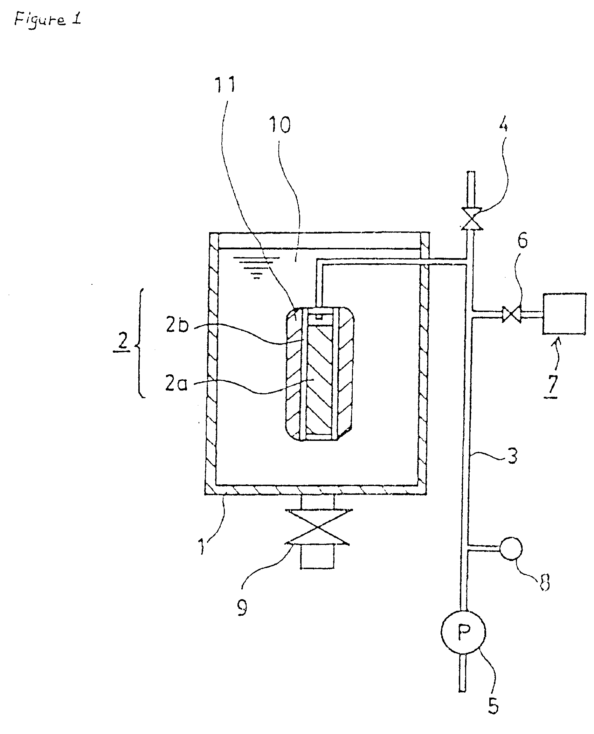

Figure 1 is a schematic drawing showing the construction of the sludge filtering and thickening installation according to the present invention, part of it being shown in a cross section. Figure 1 shows how thickened sludge, i.e. sludge that has become nonfluid, is formed on the filter cloth, while unthickened sludge retaining fluidity still remains in the sludge tank away from the surface of the filter cloths. For the sake of simplicity, only one filter plate is shown in the Figure.

In Figure 1, a filter plate 2 comprising a water-permeable plate 2a and a filter cloth 2b sealing the outer surface of the water-permeable plate 2a is disposed at the centre of a sludge tank 1, where a filtrate discharge pipe 3 connected to the upper edge of the filter plate 2 leads to the outside of the sludge tank 1. The filtrate discharge pipe 3 extends horizontally out of the sludge tank 1 and then branches vertically upwardly and downwardly, the upwardly extended branch being connected to an air release valve 4. The downwardly extended branch continues beneath the base of the sludge tank 1 and is connected to the intake side of a filtrate discharge pump 5. A water supply means 7 is connected via a gate valve 6 to the filtrate discharge pipe 3 upstream of the discharge pump 5, and a vacuum indicator 8 is connected to the filtrate discharge pipe 3 between the air release valve 4 and the filtrate discharge pump 5. A discharge valve 9 for thickened sludge is provided in the base of the sludge tank 1.

Unthickened sludge 10 is supplied into the sludge tank 1 and is filtered to form a layer of thickened sludge 11 on the surface of the filter cloth 2b located on the filter plate 2, while water from the sludge permeates through the filter cloth 2b and is discharged through the filtrate discharge pipe 3.

The operation of the filtering and thickening installation constructed as above is as follows:

First, unthickened sludge 10 to be thickened is supplied into the sludge tank 1 up to a level above the top of the filter plate 2. The air release valve 4 and gate valve 6 are opened, and the filtrate discharge pipe 3 is filled with water by the water supply means 7. Air present in the filtrate discharge pipe 3 escapes through the air release valve 4. The air release valve 4 is then closed, and the filtrate discharge pump 5 is operated, and the gate valve 6 is closed when the pressure reaches a predetermined value, as indicated by the vacuum indicator 8. The operation of the pump with the air release valve closed causes negative pressure, augmented by the siphon effect according to the length of the filtrate discharge pipe 3, to act upon inside the filter plate 2, causing the water contained in the unthickened sludge 10 in contact with the filter cloth 2b be permeate inside the filter plate 2 to be discharged via the filtrate discharge pipe 3, while the particles in the unthickened sludge 10 are collected and deposited on the filter cloth 2b. Suction pressure in the filtrate discharge pump 5 is monitored by the vacuum indicator 8, and when the water supply is stopped as the pressure reaches 200 mmHg, the filtrate discharge pump 5 operates with increased suction pressure that causes a greater negative pressure to act upon the inside of the filter plate 2. This negative pressure can reach a maximum of 700 mmHg.

The interior of the filter plate 2 has sufficient negative pressure, where sludge is filtered and a layer of thickened sludge 11 is deposited on the surface of the filter plate 2. The filtrate discharge pump 5 is then stopped, and the unthickened and still fluid sludge 10 is removed from the sludge tank 1. Air is then blown back into the tank through the air release valve 4 to back-flush the filter plate 2, and the thickened sludge 11 falls from the filter cloth 2a to the base of the tank from where it can be removed from the tank via the thickened sludge removal valve 9.

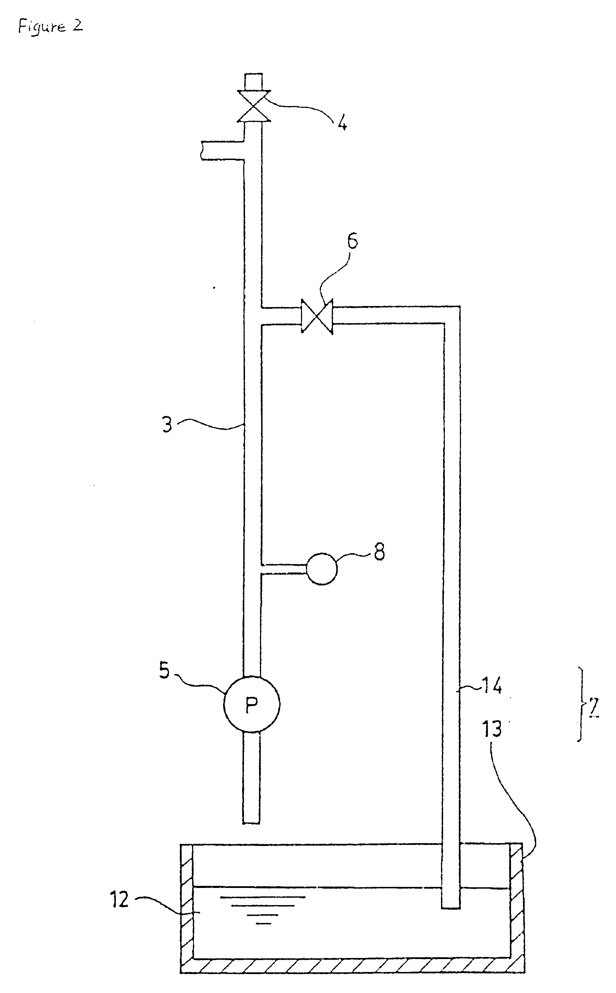

Figure 2 is a schematic drawing showing one example of the water supply means 7 in Figure 1, and the parts common to those in Figure 1 have been assigned the same numbers. The installation shown in Figure 2 differs from that of Figure 1 in that filtrate 12 is used instead of water fed from the water supply means 7, and the installation shown in Figure 2 uses a filtrate tank 13 and a suction pipe 14 to provide water instead of the water supply means 7. In Figure 2, an extended portion of the piping to the gate valve 6 forms the suction pipe 14 that is parallel to the filtrate discharge pipe 3, the lower end thereof reaching into the filtrate tank 13 to dip into the liquid therein. It will be appreciated that the lower end of the suction pipe 14 is placed below the lower end of the filtrate discharge pipe 3. To explain the operation, first the filtrate tank 13 is filled with water to a level above the lower end of the suction pipe 14 but below the lower end of the discharge pipe 3; the pump 5 is then operated with the air release valve 4 closed and the gate valve 6 opened to suck water into the suction pipe 14; water is supplied into the filtrate discharge pipe 3 through the suction pipe 14. Operation then continues as described above, the gate valve 6 being closed after the sludge has been filtered and filtrate 12 has flowed into the filtrate tank 13. Thereafter, the filtrate 12 can be used as feed water.

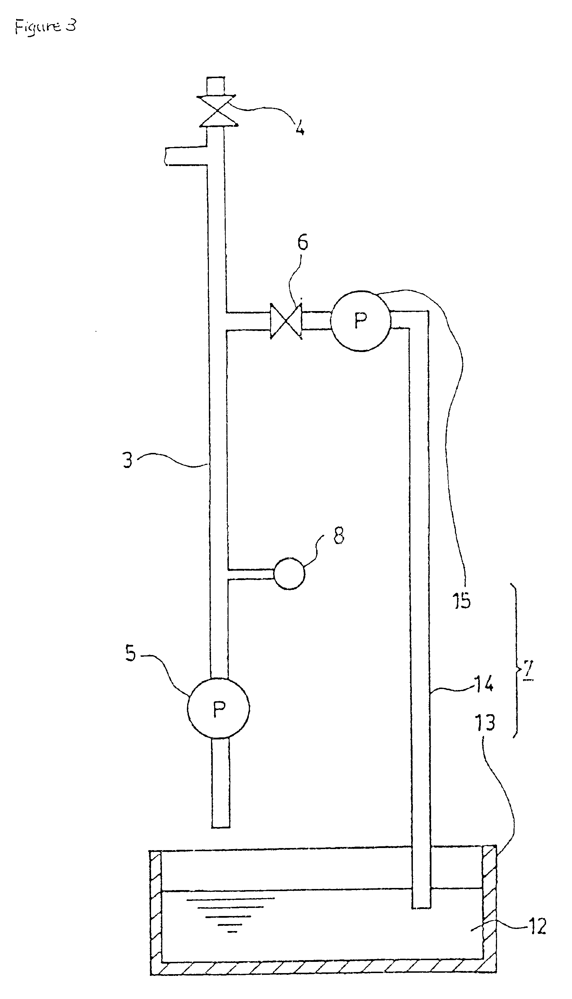

Figure 3 is a schematic drawing showing another alternative to the water supply means 7, which has basically the same configuration as that shown in Figure 2. However, it is different from the one shown in Figure 2 in that a water feed pump 15 is provided in the suction pipe 14 between the filtrate tank 13 and the gate valve 6. This arrangement assures a more reliable water supply into the filtrate discharge pipe 3, and can raise the supply velocity.

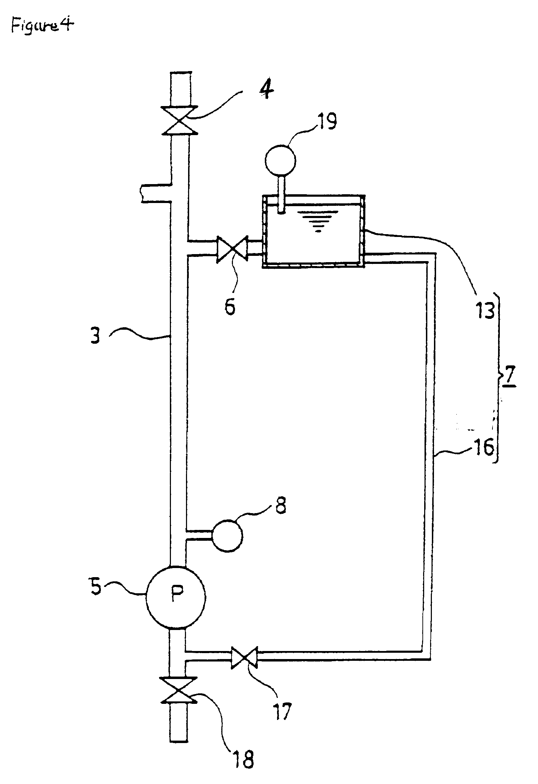

Figure 4 is a schematic drawing showing still another alternative to water supply means 7. In this example, the filtrate tank 13 is installed adjacent to the gate valve 6, and the filtrate discharge pipe 3 is connected downstream of the filtrate discharge pump 5 to a second gate valve 17 leading to an inlet pipe 16 for the filtrate tank 13. A third gate valve 18 near the end of the filtrate discharge pipe 3 allows filtrate to be delivered to the filtrate tank 13 by closing the third gate valve 18 and opening the second gate valve 17. A water level gage 19 is also disposed in the filtrate tank 13. Thus, the filtrate tank 13 is placed at a considerably higher position relative to the filtrate discharge pipe 3 than in the examples shown in Figures 2 and 3.

The operation of the installation shown in Figure 4 is as follows:

First, the air release valve 4 and the gate valve 6 are opened to feed water into the filtrate discharge pipe 3;

The air release valve 4 is closed; the filtrate discharge pump 5 is operated, with the second gate valve 17 closed and the third gate valve 18 opened;

After the required degree of vacuum has been raised, the gate valve 6 and the third gate valve 18 are closed, while the second gate valve 17 is opened to feed filtrate 12 into the filtrate tank 13;

When the water level gage 19 indicates that the water level of the filtrate 12 has reached a certain level, then second gate valve 17 is closed and third gate valve 18 is opened to allow surplus filtrate 12 to be discharged.

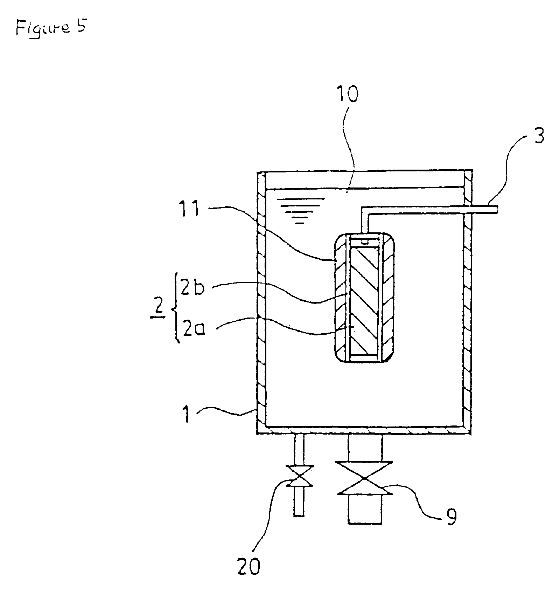

Figure 5 is a schematic drawing showing the construction of the installation used to obtain high-concentration thickened sludge, partially shown in cross section. The parts common to Figure 1 are given the same reference numbers. The difference between the installation shown in Figure 5 and that shown in Figure 1 is that an unthickened sludge removal valve 20 is added to the bottom of the sludge tank 1 as an unthickened sludge extracting device. The unthickened sludge extracting device can alternatively be a pump, which is used to extract unthickened sludge. Since the filtrate discharge pipe 3 and the water supply means 7 are identical with those already shown, their illustrations are omitted. The installation shown in Figure 5 can discharge unthickened sludge 10 from the tank 1 via the unthickened sludge removal valve 20, and the filtrating operation continues even if filtration has progressed and thickened sludge 11 has been formed.

To explain, when the unthickened removal valve 20 is opened and the fluid unthickened sludge 10 is removed from the sludge tank 1, the thickened sludge formed on the filter plate 2 in the sludge tank 1 contacts the atmosphere. Thus the thickened sludge 11 deposited on the filter plate 2 no longer contacts the liquid unthickened sludge 10. As a result, the suction applied to the filter plate 2 by the filtrate discharge pipe 3 causes further filtration of only the already formed condensed sludge 11 can continue, thereby creating high-concentration thickened sludge.

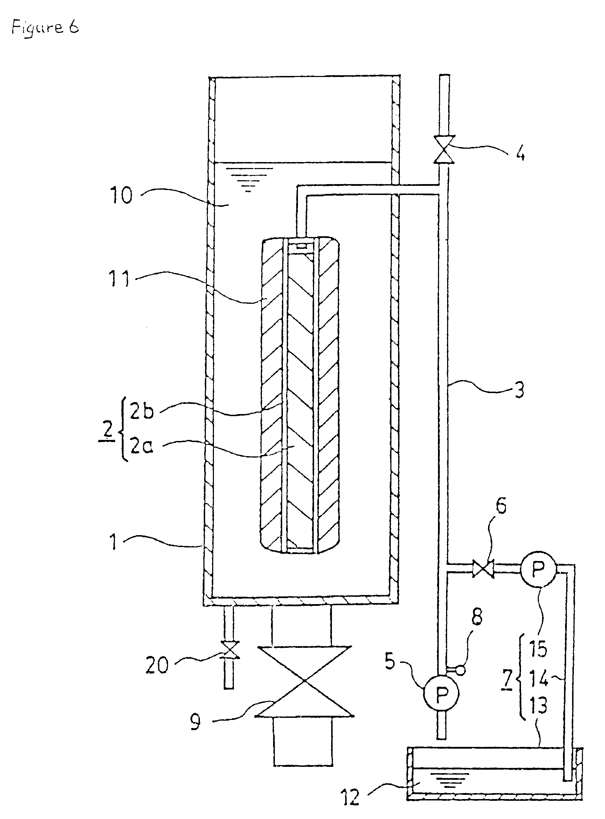

Figure 6 is a schematic drawing showing the filtrate discharge pipe 3 and the water supply means 7, whose illustrations have been omitted in Figure 5. The filtrate discharge pipe 3 and the water supply means 7 in Figure 6 have the configuration shown in Figure 3, hence a detailed explanation thereof is omitted. The Figure shows that the thickened sludge 11 is formed on the filter cloth 2b, while the unthickened sludge 10 remains in the body of liquid in the sludge tank 1 away from the surface of the filter cloth 2b.

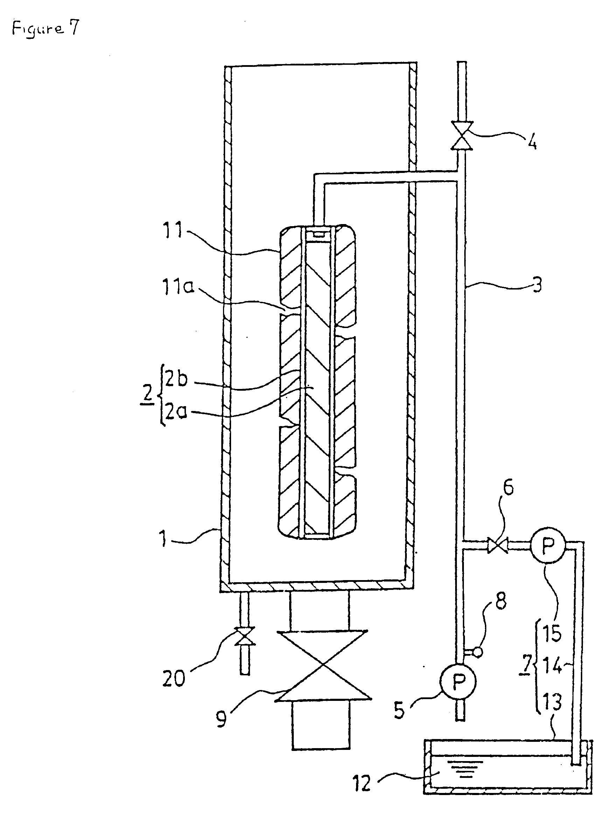

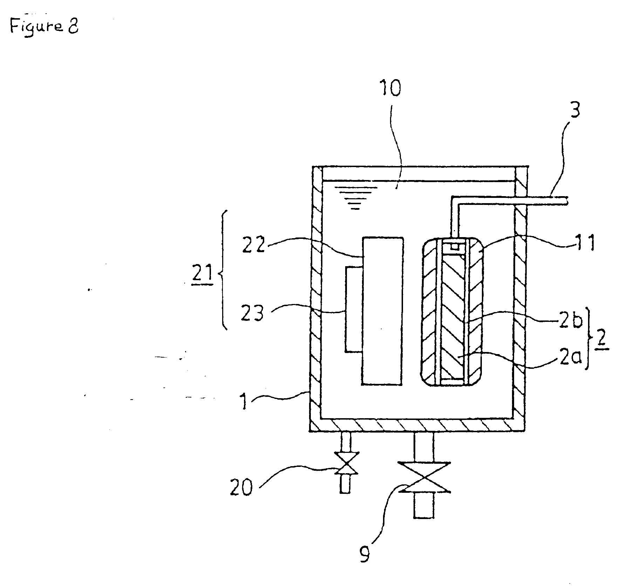

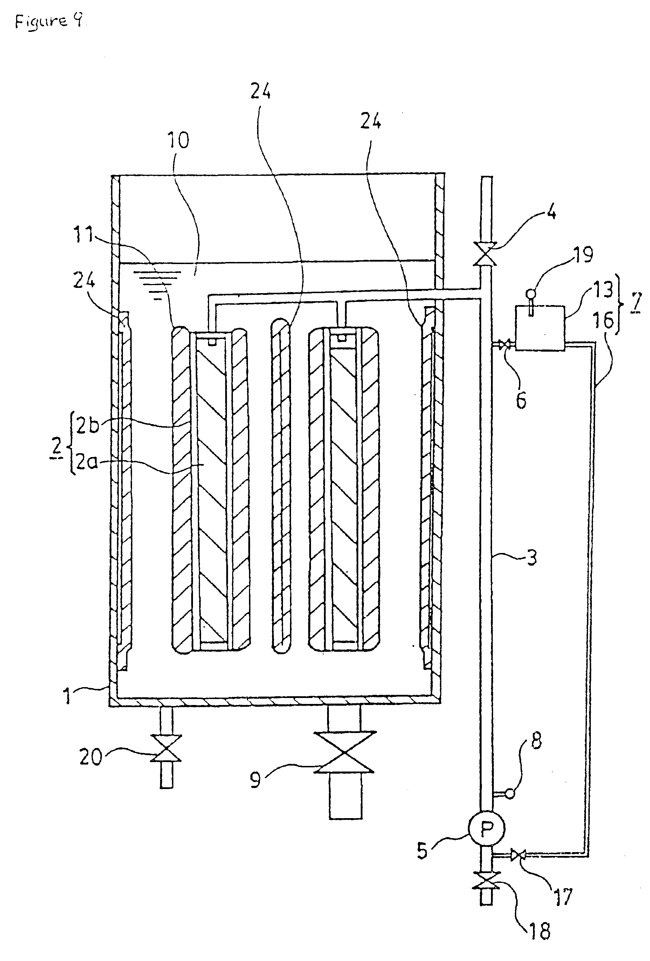

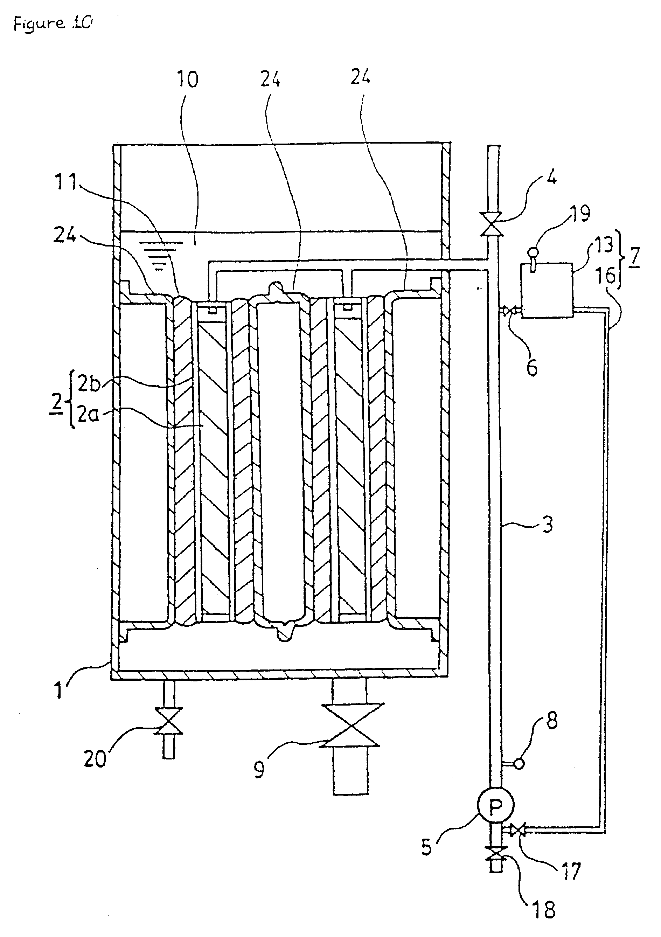

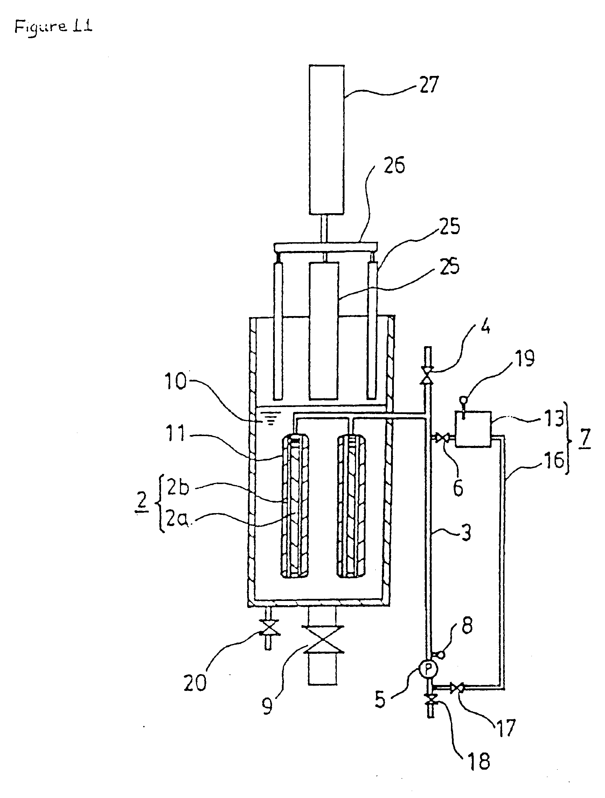

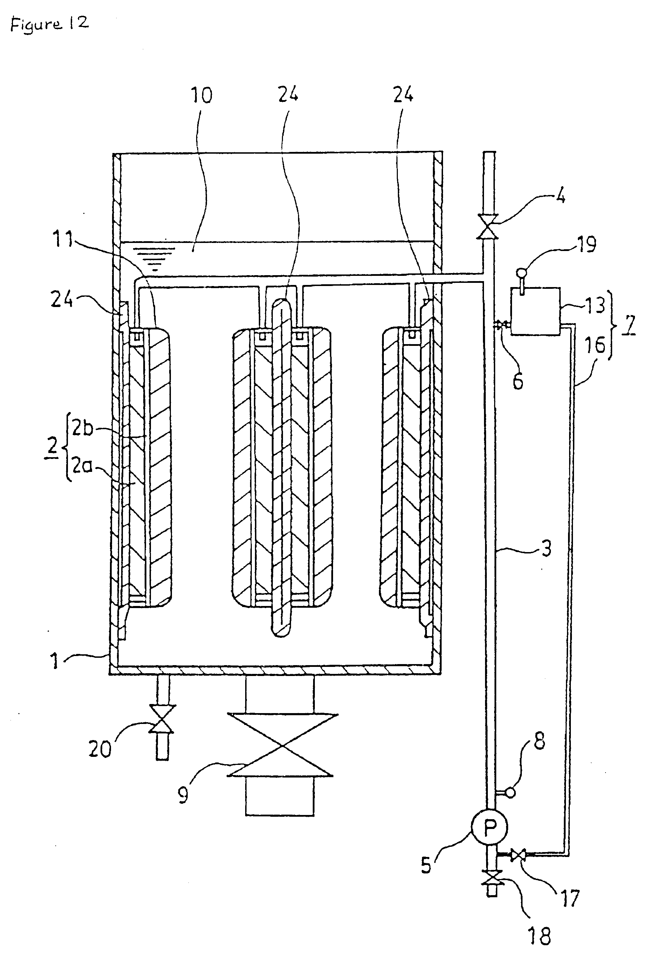

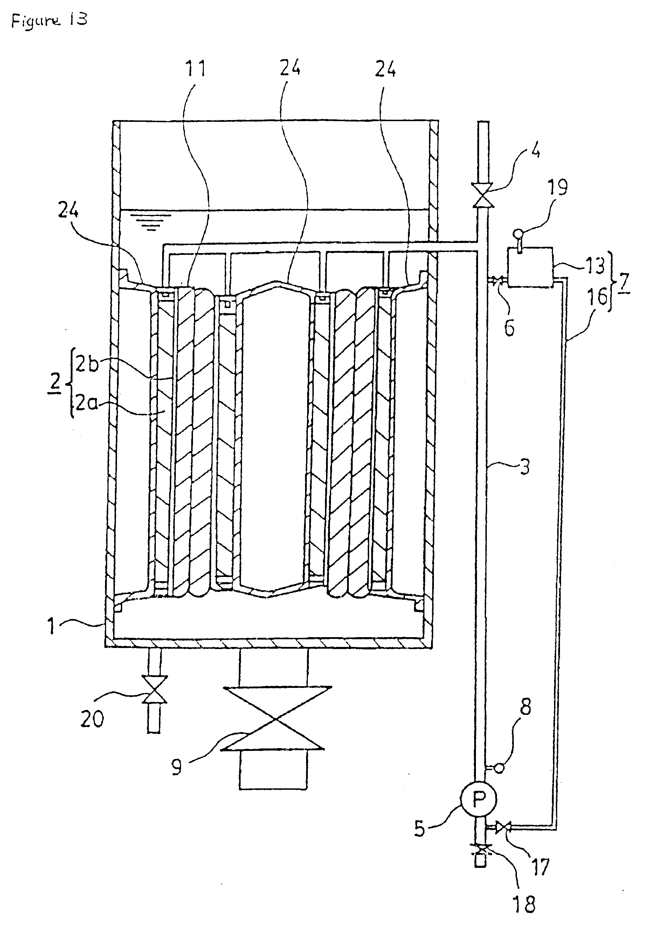

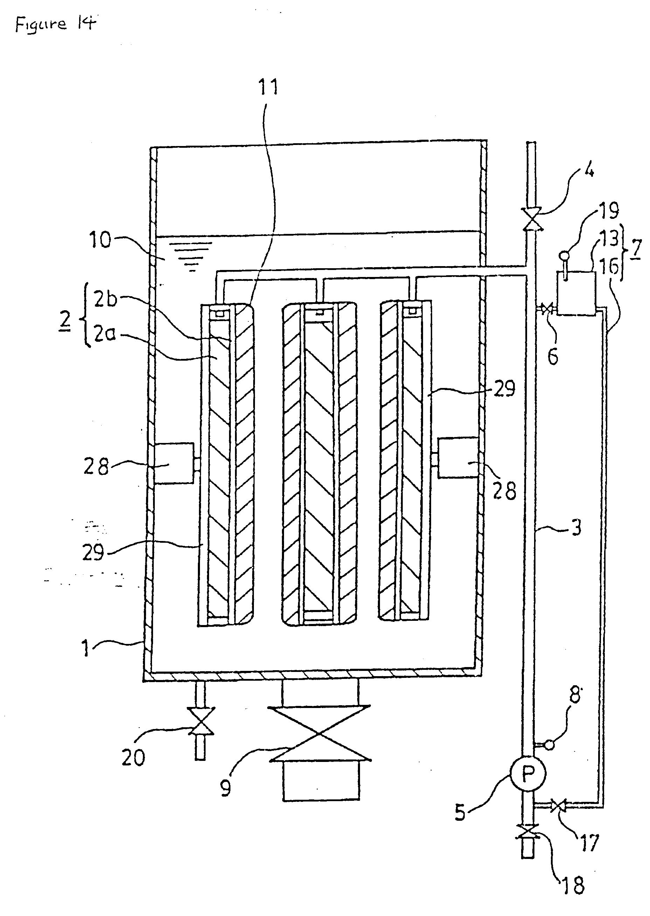

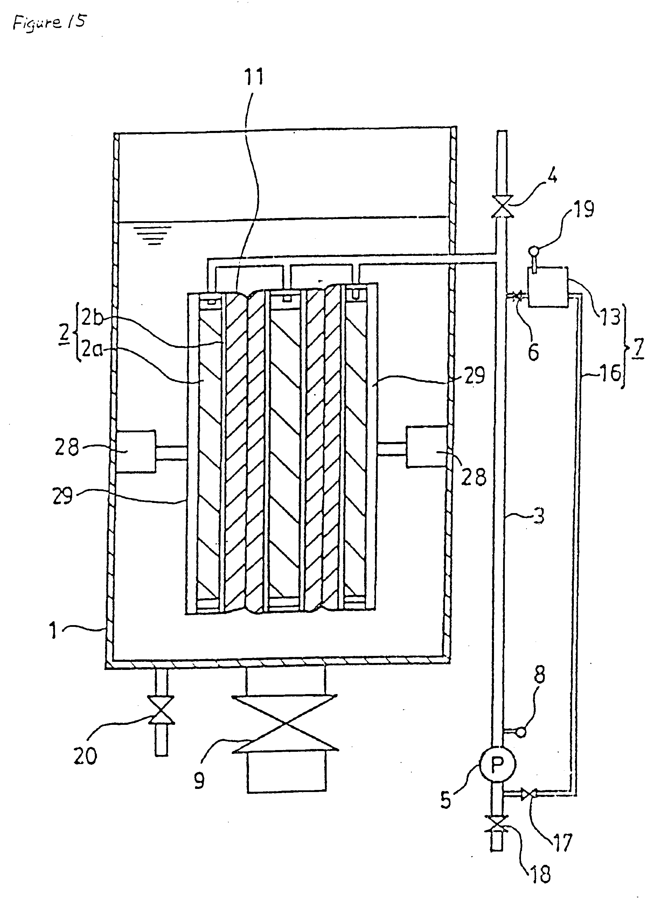

Figure 7 shows the result of continued filtration with the unthickened sludge removal valve 20 opened when the thickness of the deposited layers of thickened sludge 11 shown in Figure 6 has increased, and the unthickened sludge 10 in the sludge tank 1 has been removed. Only the thickened sludge 11 which has been deposited on the surface of the filter cloth 2b located on the filter plate 2 remains in the sludge tank 1, and water removal from only the thickened sludge 11 has progressed with no water being supplied to the thickened sludge 11 from the unthickened sludge 10 present off the filter cloth 2b. The Figure further shows a state in which the thickened sludge 11 has contracted generating cracks 11a. When cracks 11a are generated, air enters into the filter plate 2 through these cracks 11a, thereby reducing the negative pressure force in the filter plate 2. Therefore, thickening and filtration can continue effectively only until these cracks 11a are formed to a depth that reaches the filter cloth 2b.

Using purified water sludge with a solids component of 4%, for example, as a sludge test specimen, the interior of the filter plate 2 was subjected to negative pressure of 700 mmHg by operating the filtrate discharge pump 5. The test specimen was filtered for 30 minutes, and then the unthickened sludge removal valve 20 was opened and the unthickened sludge 10 removed from the tank. The filtration continued with only the thickened sludge 11 deposited on the surface of the filter cloth 2b located on the filter plate 2. The degree of vacuum dropped slowly after 34 minutes, and the indication on the vacuum gage fell to below 300 mmHg after 40 minutes. The solids component in the thickened sludge at this time was 20.4%, which means that a higher solids concentration was achieved than that which is obtained by conventional methods which simply raise the degree of vacuum.

The filtering and thickening installation, and the method for filtering and thickening thereof have been explained. Basically, in the present invention, a water supply means and a filtrate discharge pump are fitted onto a filtrate discharge pipe to increase the negative pressure within the filter plates.

Conventional sludge filtering and thickening installations supply sludge into the sludge tank, collect sludge particles on the surfaces of the filter plates using the negative pressure generated in the filter plates by the water filled into the filtrate discharge pipe, and discharge the water from the tank through the filtrate discharge pipe. On the other hand, the filtering and thickening installation according to the present invention is, as explained in the preferred embodiments, provided with a water supply means and a filtrate discharge pump so that a high negative pressure will act on the inside of the filter plates, wherein filtration progresses as unthickened sludge is removed from the sludge tank using an unthickened sludge extraction device disposed at the bottom of the sludge tank, while filtration of previously formed thickened sludge continues.

If sludge is filtered and thickened using the filtering and thickening installation according to the present invention, a high negative pressure is applied to the filter plates, so that high-concentration thickened sludge can be obtained efficiently by the operating devices disposed in the sludge tank.

## Claims

1. A sludge filtering and thickening installation comprising filter plates (2) located in a sludge tank (1), an extraction device (20) for removing unthickened sludge from the tank and a filtrate discharge pipe (3) leading out of the tank (1) and one end of which is connected to the upper side of the filter plates (2) said filtrate discharge pipe being provided with a filtrate discharge pump (5) and water supply means comprising a filtrate tank (13) and a suction pipe (14) to supply filtrate pumped from the filtrate tank (13) into the filtrate discharge pipe (3) upstream of the filtrate discharge pump (5) and means for releasing air from the filtrate discharge pipe (3) between the filter plates (2) and the discharge pump (5).

2. A sludge filtering and thickening installation as claimed in claim 1 in which the water supply means includes a connecting pipe (16) between the filtrate tank and the delivery side of the filtrate discharge pump (5).

3. A sludge filtering and thickening method comprising the steps of :
supplying unthickened sludge to be thickened to a sludge tank (1) containing a number of filter plates (2);
releasing air through air release means (4) from a filtrate discharge pipe (3) connected to the upper sides of the filter plates (2) and filling said filtrate discharge pipe (3) with water through a water inlet valve (6) connected from a water supply means (7) ;
closing said air release means (4) and operating a filtrate discharge pump (5) in said filtrate discharge pipe (3) and closing said water inlet valve (6), to extract filtrate within said filter plates (2) ;
removing unthickened sludge from the tank (1) through an unthickened sludge extracting device (20) ;
and further filtering only that thickened sludge that has been deposited on the filter plates (2) by continuing to operate the filtrate discharge pump (5) to apply suction to the filtrate discharge pipe (3).

## Patentansprüche

1. Schlammfilter- und -eindickanlage, welche umfaßt in einem Schlammtank (1) angeordnete Filterplatten (2), eine Extraktionsvorrichtung (20) zum Entfernen von nicht eingedicktem Schlamm vom Tank und ein aus dem Tank (1) führendes Filtratabzugsrohr (3), dessen eines Ende mit der Oberseite der Filterplatten (2) verbunden ist, wobei dieses Filtratabzugsrohr versehen ist mit einer Filtratabzugspumpe (5) und einer Wasserzufuhr, umfassend einen Filtrattank (13) und ein Saugrohr (14) zum zuführen von vom Filtrattank (13) gepumpten Filtrats in das Filtratabzugsrohr (3) stromaufwärts der Filtratabzugspumpe (5) und Mittel zum Entlüften von Luft von dem Filtratabzugsrohr (3) zwischen den Filterplatten (2) und der Abzugspumpe (5).

2. Schlammfilter- und -eindickanlage wie in Anspruch 1 beansprucht, bei welcher die Wasserzufuhr zwischen dem Filtrattank und der Druckseite der Filtratabzugspumpe (5) ein Verbindungsrohr (16) aufweist.

3. Schlammfilter- und -eindickverfahren, welches folgende Schritte umfaßt:
Zufuhr eines einzudickenden nicht eingedickten Schlamms zu einem eine Anzahl von Filterplatten (2) enthaltenden Schlammtank (1);
Entlüften von Luft durch ein Entlüftungsmittel (4) von einem mit den Oberseiten Filterplatten (2) verbundenem Filtratabzugsrohr (3) und Füllen des Filtratabzugsrohrs (3) durch ein mit einer Wasserzufuhr (7) verbundenes Wassereinlaßventil (6) mit Wasser;
Schließen des Entlüftungsmittels (4) und Inbetriebnahme einer Filtratabzugspumpe (5) im Filtratabzugsrohr (3) und Schließen des Wassereinlaßventils (6), um Innerhalb der Filterplatten (2) Filtrat abzuziehen;
Entfernen des nicht eingedickten Schlamms vom Tank (1) durch eine Extraktionsvorrichtung (20) für den nicht eingedickten Schlamm;
und weiteres Filtern lediglich des eingedickten Schlamms, der sich auf den Filterplatten (2) abgesetzt hat, durch fortgesetztes Betreiben der Filtrationsabzugspumpe (5), um einen Saugdruck in das Filtratabzugsrohr (3) anzulegen.

## Revendications

1. Installation de filtration et d'épaississement d'une boue comportant des plaques filtrantes (2) positionnées dans un réservoir de boue (1), un dispositif d'extraction (20) pour enlever de la boue non-épaissie du réservoir et un tuyau de décharge de filtrat (3) quittant le réservoir (1) et dont une première extrémité est reliée au côté supérieur des plaques filtrantes (2), ledit tuyau de décharge de filtrat étant muni d'une pompe de décharge de filtrat (5) et de moyens d'alimentation en eau comportant un réservoir de filtrat (13) et un tuyau d'aspiration (14) pour envoyer du filtrat pompé à partir du réservoir de filtrat (13) dans le tuyau de décharge de filtrat (3) en amont de la pompe de décharge de filtrat (5) et des moyens pour libérer l'air du tuyau de décharge de filtrat (3) situés entre les plaques filtrantes (2) et la pompe de décharge (5).

2. Installation de filtration et d'épaississement de boue selon la revendication 1, dans laquelle les moyens d'alimentation en eau comportent un tuyau de connexion (16) entre le réservoir de filtrat et le côté sortie de la pompe de décharge de filtrat (5).

3. Procédé de filtration et d'épaississement de boue, comportant les étapes consistant à :
alimenter de la boue non-épaissie, destinée à être épaissie, vers un réservoir de boue (1) contenant plusieurs plaques filtrantes (2),
enlever l'air, à travers des moyens d'enlèvement d'air (4), d'un tuyau de décharge de filtrat (3) relié au côté supérieur des plaques filtrantes (2) et remplir ledit tuyau de décharge de filtrat (3) à l'aide d'eau à travers une vanne d'entrée d'eau (6) reliée à des moyens d'alimentation en eau (7),
fermer lesdits moyens d'enlèvement d'air (4) et actionner une pompe de décharge de filtrat (5) située dans ledit tuyau de décharge de filtrat (3) et fermer ladite vanne d'entrée d'eau (6), pour extraire du filtrat situé dans lesdites plaques filtrantes (2),
enlever la boue non-épaissie du réservoir (1) à travers un dispositif d'extraction de boue non-épaissie (20),
et de plus filtrer uniquement la boue épaissie qui a été déposée sur les plaques filtrantes (2) en continuant d'actionner la pompe de décharge de filtrat (5) pour appliquer une aspiration dans le tuyau de décharge de filtrat (3).
